# EUROPÄISCHE PATENTSCHRIFT

(11) **EP 2 499 878 B1**
(45) Veröffentlichungstag und Bekanntmachung des Hinweises auf die Patenterteilung: **28.04.2021**
(21) Anmeldenummer: 10795922.3
(22) Anmeldetag: 09.11.2010
(51) Int. Cl.: H04W 88/08, H04B 7/155

(54) **MASTER-EINHEIT, REMOTE-EINHEIT SOWIE MULTIBAND-ÜBERTRAGUNGSSYSTEM**
MASTER UNIT, REMOTE UNIT AND MULTIBAND TRANSMISSION SYSTEM
UNITÉ MAÎTRE, UNITÉ DISTANTE ET SYSTÈME DE TRANSMISSION MULTIBANDE

(30) Priorität: 12.11.2009 DE 102009052936
(43) Veröffentlichungstag der Anmeldung: 19.09.2012
(73) Patentinhaber: Andrew Wireless Systems GmbH, 86675 Buchdorf (DE)
(72) Erfinder: BRAZ, Oliver, 86653 Monheim (DE); EISENWINTER, Stefan, 86675 Buchdorf (DE); SCHMALISCH, Mathias, 24502 Lynchburg / VA (US); STEFANIK, Jörg, 86609 Donauwörth (DE); SCHMID, Peter, 86688 Marxheim-Neuhausen (DE)
(74) Vertreter: FDST Patentanwälte
(86) Internationale Anmeldenummer: PCT/EP2010/006797
(87) Internationale Veröffentlichungsnummer: WO 2011/057750

(56) Entgegenhaltungen:
- EP-A1- 2 071 752
- EP-A2- 1 998 480
- US-A- 5 278 690
- US-A- 5 604 768
- US-A1- 2001 033 611
- US-A1- 2008 192 855

## Beschreibung

Die Erfindung bezieht sich auf eine Master-Einheit und auf eine Remote-Einheit zur Verteilung und Zusammenführung von Signalen mindestens eines drahtlosen Kommunikationsnetzes und mindestens eines digitalen Netzwerks. Die Erfindung bezieht sich weiter auf ein Multiband-Übertragungssystem mit einer derartigen Master-Einheit und mit einer derartigen Remote-Einheit.

Ein Multiband-Übertragungssystem der vorgenannten Art dient grundsätzlich der Verteilung und der Zusammenführung von Signalen mindestens eines drahtlosen Kommunikationsnetzes und mindestens eines digitalen Netzwerks. Die Master-Einheit dient hierbei zur Weiterleitung und Verstärkung von Signalen zwischen einer Basisstation und der Remote-Einheit. Die Remote-Einheit ist zur Kommunikation mit dem Endnutzer, insbesondere mittels eines mobilen Endgeräts, eingerichtet. Die Kommunikation findet hierbei bidirektional statt. Dabei spricht man von einer Donwlink-Richtung bei einer Signallaufrichtung von der Basisstation bzw. der Mastereinheit zur Remote-Einheit bzw. zum Endnutzer und von einer Uplink-Richtung bei einer Signallaufrichtung vom Endnutzer zur Master-Einheit bzw. zur Basisstation.

Die Master-Einheit ist mit der Basisstation funk- oder kabelverbunden und übermittelt in Downlink-Richtung bzw. empfängt in Uplink-Richtung Signale verschiedener mobiler Kommunikationsstandards in verschiedenen Frequenzbändern, wie beispielsweise GSM, DCS, UMTS, LTE, AWS, PCS, WiMAX, etc. Zusätzlich werden Daten oder Signale eines digitalen Kommunikationsnetzes, wie beispielsweise digitale Video- oder Audiodaten, DVD etc. ausgetauscht. Die jeweils erhaltenen Signale werden in der Mastereinheit aufbereitet, insbesondere verstärkt, und an eine Remote-Einheit in Downlink-Richtung weitergeführt bzw. in Uplink-Richtung von dieser empfangen. Über die Remote-Einheit werden die Signale der drahtlosen Kommunikationsnetzwerke an den Endnutzer ausgesendet bzw. von diesem empfangen. Ebenso kann der Endnutzer kabelgebunden über die Remote-Einheit innerhalb des digitalen Netzwerks kommunizieren, insbesondere Daten zwischen den am Netzwerk angeschlossenen Endgeräten, beispielsweise Computer, Steuergeräte, Fernsehgeräte etc., austauschen bzw. Geräte hierüber ansteuern.

Eine Remote-Einheit ist beispielsweise für verschiedene Räume oder Etagen eines Gebäudes vorgesehen, um lokal eine ausreichende Signalstärke für den Endnutzer zu erzielen. Eine zentrale Master-Einheit versorgt hierbei insbesondere eine Mehrzahl von Remote-Einheiten. Zur Trennung der beiden Signallaufrichtungen sind generell die beiden Techniken FDD (Frequency Division Duplexing, Frequenzmultiplex) und TDD (Time Division Duplexing, Zeitmultiplex) bekannt.

Bei der Übertragung von Signalen zwischen der Master-Einheit und der Remote-Einheit mittels Frequenzmultiplex, und insbesondere auch bei der gleichzeitigen Übertragung von digitalen und analogen Signalen, kann es zu einer unerwünschten Intermodulation zwischen den verwendeten Frequenzbändern kommen. Hierdurch wird die Signalgüte insgesamt verschlechtert. Gegebenenfalls ist eine saubere Trennung der Frequenzbänder auf der Empfängerseite nicht mehr möglich. Diese Problematik wird beispielsweise bereits in der IEEE-Transactions on Communications, Vol. COM-24, NO. 9, September 1976, S. 1008ff diskutiert.

Aus der US 7,336,680 B2 ist eine Architektur für ein Multiband-Übertragungssystem zur Übertragung von fequenzmultiplexten Signalen verschiedener Standards gemäß einer Punkt-zu-Punkt-Anordnung bekannt. Zu einer bidirektionalen Kommunikation zwischen einer Zentraleinheit und einem Endnutzer werden den einzelnen Frequenzkanälen statistisch Frequenzen zugeordnet und hierdurch ein Punkt-zu-Punkt-Verbindungskanal geschaffen. Dabei wird den Signalen oberster Priorität eine bestimmte Frequenz zugeordnet. Die Frequenzen der anderen Signale werden dynamisch zugewiesen. Somit werden die Daten unterschiedlicher Standards durch entsprechende Modulation innerhalb der zugewiesenen Frequenzbänder übertragen. Die Frequenzen selbst werden nicht umgesetzt.

Aus der US 7,088,921 B1 ist ein System zur Übertragung von Ethernet-Daten über ein passives optisches Netzwerk in einem Punkt-zu-Mehrpunkt-System bekannt. Zwar werden die Ethernetdaten hier zur Vermeidung von Kollisionen in der Uplink-Richtung mit Hilfe eines FSK-Modulators auf ein Träger-Signal moduliert, doch erfolgt die Kombination der verschiedenen Uplink-Daten-Ströme erst nach der elektro-optischen Wandlung.

Aus der US 2008/0192855 A1 ist weiter ein System zur Übertragung so genannter MIMO-Signale bekannt. Dabei steht MIMO für die Abkürzung "Multiple Input Multiple Output", wobei zur Erhöhung der Funkübertragungsrate innerhalb einer Frequenz oder innerhalb eines Frequenzbandes mehrere, räumlich voneinander getrennte Antennen genutzt werden. In der US 2008/0192855 A1 ist zur Trennung der MIMO-Signale gleicher Frequenz vorgesehen, diese durch Frequenzkonversion voneinander zu separieren und anschließend gemeinsam kabelgebunden zu übertragen. Hierbei wird insbesondere eines der MIMO-Signale gleichfrequent übertragen. Die anderen MIMO-Signale werden zur Verhinderung einer Intermodulation entsprechend geeignet frequenzkonvertiert. Zum Wiederherstellen der ursprünglichen MIMO-Signale durch eine Frequenzrückkonversion wird ein Referenzsignal mit übertragen.

Auch aus der US 5,339,184 ist ein Multiband-Übertragungssystem zur Übertragung einer Vielzahl von Radiosignalen unterschiedlicher Frequenzen bekannt. Dort werden die Frequenzbänder aller Signale unterschiedlicher Frequenzen in eine gleiche Anzahl von nicht-überlappenden Frequenzen bzw. Frequenzbändern umgesetzt. Die Signale der nicht-überlappenden Frequenzbänder werden zwischen einer Master-Einheit und einer Remote-Einheit optisch übertragen. Nach der Übertragung in beide Richtungen werden die Frequenzen jeweils wieder zurückkonvertiert.

In der EP 2 071 752 A1 wird ein Datenübertragungssystem beschrieben, bei welchem xDSL-Signale und drahtlose Signale in einer Mischeinheit gemultiplext werden, um schließlich gemeinsam über eine optische Faser übertragen zu werden. Die xDSL-Signale werden mittels Zwischenfrequenzen hoch-konvertiert, wohingegen die drahtlosen Signale mit einer Radiofrequenz hoch-konvertiert werden. Nach der Übertragung über die Faser werden die xDSL-Signale demoduliert und an Terminals übergeben, die drahtlosen Signale werden über eine Antenne abgestrahlt.

Aufgabe der vorliegenden Erfindung ist es, ein gegenüber dem Stand der Technik verbessertes Multiband-Übertragungssystem zur Verteilung und Zusammenführung von Signalen mindestens eines drahtlosen Kommunikationsnetzes und mindestens eines digitalen Netzwerks anzugeben. Hierzu soll eine verbesserte Master-Einheit sowie eine verbesserte Remote-Einheit angegeben werden.

Diese Aufgabe wird erfindungsgemäß gelöst durch eine Master-Einheit mit den Merkmalen gemäß Anspruch 1, durch eine Remote-Einheit mit den Merkmalen gemäß Anspruch 7 sowie durch ein Multiband-Übertragungssystem mit den Merkmalen gemäß Anspruch 12.

Demnach ist eine Master-Einheit vorgesehen, die mindestens ein Mastermodem, eine Master-Uplink-Schnittstelle, eine Master-Downlink-Schnittstelle, einen Master-Downlink-Combiner, einen Master-Uplink-Splitter, einen Referenzfrequenzgeber und eine Master-Übertragungseinheit umfasst, wobei das Mastermodem zur Kommunikation mit dem mindestens einen digitalen Netzwerk eingerichtet und mit dem Referenzfrequenzgeber verbunden ist, wobei die Master-Downlink-Schnittstelle und die Master-Uplink-Schnittstelle zur Kommunikation mit einer Basisstation des mindestens einen drahtlosen Kommunikationsnetzes eingerichtet sind, wobei der Master-Downlink-Combiner und der Master-Uplink-Splitter zur Verbindung mit mindestens einer Remote-Einheit eingerichtet sind, wobei in Downlink-Richtung Signalleitungen aus dem Master-Downlink-Combiner zu einer gemeinsamen Signalleitung zusammengeführt sind, auf die das Referenzfrequenzsignal des Referenzfrequenzgebers und ein Datensignal des Mastermodems aufgeschaltet sind, und die gemeinsame Signalleitung in die Master-Übertragungseinheit geführt ist, wobei in Uplink-Richtung aus einer gemeinsamen Signalleitung im Master-Uplink-Splitter Signalleitungen aufgespalten sind und ein Datensignal des Mastermodems ausgekoppelt ist, wobei zur Modemtaktung das Referenzfrequenzsignal des Referenzfrequenzgebers verwendet ist.

Die erfindungsgemäß hierzu vorgesehene Remote-Einheit umfasst mindestens ein Remotemodem, eine Remote-Uplink-Schnittstelle, eine Remote-Downlink-Schnittstelle, einen Remote-Uplink-Combiner, einen Remote-Downlink-Splitter, einen Referenzfrequenzempfänger und eine Remote-Übertragungseinheit, wobei das Remotemodem zur Kommunikation mit mindestens einem Nutzerendgerät eingerichtet und mit dem Referenzfrequenzempfänger verbunden ist, wobei die Remote-Downlink-Schnittstelle und die Remote-Uplink-Schnittstelle zur Kommunikation mit einem Netzendgerät des mindestens einen drahtlosen Kommunikationsnetzes eingerichtet sind, wobei der Remote-Downlink-Splitter und der Remote-Uplink-Combiner zur Verbindung mit einer Master-Einheit eingerichtet sind, wobei in Downlink-Richtung eine gemeinsame Signalleitung aus der Remote-Übertragungseinheit geführt ist, der ein Referenzfrequenzsignal und ein Datensignal des mindestens einen digitalen Netzwerks ausgekoppelt und dem Referenzsignalempfänger bzw. dem Remotemodem zugeführt sind, und die gemeinsame Signalleitung im Remote-Downlink-Splitter auf eine Anzahl von Signalleitungen aufgeteilt ist, die mit der Remote-Downlink-Schnittstelle verbunden sind, und wobei in Uplink-Richtung eine Anzahl von Signalleitungen im Remote-Uplink-Combiner zu einer gemeinsamen Signalleitung zusammengeführt sind, auf die das Datensignal des Remotemodems aufgeschaltet ist, und diese in Uplink-Richtung gemeinsame Signalleitung mit der Remote-Übertragungseinheit verbunden ist.

Das erfindungsgemäße Multiband-Übertragungssystem zur Verteilung und Zusammenführung von Signalen mindestens eines drahtlosen Kommunikationsnetzes und mindestens eines digitalen Netzwerks umfasst mindestens eine vorgenannte Master-Einheit und mindestens eine vorgenannte Remote-Einheit, wobei die Remote-Uplink-Schnittstelle und die Remote-Downlink-Schnittstelle der mindestens einen Remote-Einheit mit der Master-Downlink-Schnittstelle und der Master-Uplink-Schnittstelle der mindestens einen Master-Einheit über eine zentrale Signal-Leitung verbunden sind. Insbesondere können zur Verbindung an der Master-Einheit mehrere Master-Uplink- und Master-Downlink-Schnittstellen und an der Remote-Einheit mehrere Remote-Downlink-und Remote-Uplink-Schnittstellen vorgesehen sein.

Die Erfindung geht nun von der Überlegung aus, möglichst kostengünstig und einfach Signale mindestens eines drahtlosen Kommunikationsnetzes (GSM, DCS, UMTS, LTE, AWS, PCS, WiMAX etc.) und Signale mindestens eines digitalen Netzwerks (Computernetzwerk, Ethernet, digitale Audio- oder Videosignale, DVB, etc.) gemeinsam zwischen einer Master-Einheit und einer Remote-Einheit über eine Signalleitung zu führen. Dazu ist in der Master-Einheit zentral ein Referenzfrequenzgeber vorgesehen, dessen Frequenz insbesondere zur Erzeugung der Trägerfrequenz zur Übertragung der digitalen Signale verwendet wird. Hierzu ist der Referenzfrequenzgeber in der Master-Einheit mit dem Mastermodem verbunden, in welchem die entsprechende Modulation/Demodulation stattfindet. Auf der Remote-Seite ist ein Referenzfrequenzempfänger vorgesehen, dem das ausgekoppelte und in Downlink-Richtung mitübertragene Referenzfrequenzsignal zugeführt wird. Der Referenzfrequenzempfänger stellt die Referenzfrequenz wieder her. Mit dieser Referenzfrequenz wird ein in der Remote-Einheit befindliches Remotemodem zur Modulation/Demodulation der übertragenen oder erhaltenen Signale des digitalen Netzwerks angesteuert bzw. getaktet.

Als Trägerfrequenz zur Übertragung der Signale des digitalen Netzwerks wird und kann eine Frequenz verwendet werden, die von den Frequenzbändern der Standards zur Übertragung von Signalen innerhalb drahtloser Kommunikationsnetzwerke genügend beabstandet ist, so dass es auch unter Berücksichtigung von Seitenbändern nicht zu Intermodulationseffekten kommt. Dies ermöglicht es insbesondere, die Signale der drahtlosen, gleichfrequenten Kommunikationsnetzwerke zu übertragen. Dabei wird weiter ausgenutzt, dass die Frequenzbänder der Standards zur Übertragung drahtloser Kommunikation zueinander ebenfalls einen genügenden Störabstand aufweisen.

Mit der vorgesehenen Anordnung lässt sich insbesondere eine Punkt-zu-Mehrpunkt-Anordnung realisieren, wobei eine Master-Einheit über eine jeweilige gemeinsame Signalleitung mit mehreren Remote-Einheiten verbunden ist. An jeder dieser Remote-Einheiten kann ein Signal des digitalen Netzwerks sowohl eingespeist als auch abgegriffen werden. Ebenso kann an jeder dieser Remote-Einheiten über ein mobiles Endgerät eine bidirektionale Kommunikation innerhalb eines der übertragenen drahtlosen Kommunikationsnetze hergestellt werden.

Das über die gemeinsame Signalleitung mitübertragene Referenzfrequenzsignal stellt eine Taktung zu einer sauberen Abtastung der übertragenen digitalen Informationen dar. Dadurch, dass die Remote-Einheit über ein Remotemodem verfügt, kann sich beispielsweise ein Nutzer an der Remote-Einheit einloggen und beispielsweise über Ethernet oder ein anderes digitales Netzwerk die Master-Einheit programmieren. Die Master-Einheit selbst verfügt über ein Mastermodem, welches die Schnittstelle mit dem dortigen digitalen Netzwerk ist. Mit anderen Worten werden die digitalen Daten bzw. das Netzwerk als solches somit gewissermaßen von der Master-Einheit zu der oder zu mehreren Remote-Einheiten "durchgeschleift". Insofern kann der Endnutzer über die Remote-Einheit auf die im Netzwerk der Mastereinheit angeschlossenen Geräte zurückgreifen. Über das mit übertragene Referenzfrequenzsignal sind zugleich alle Remote-Einheiten synchronisiert; sie takten alle gleich. Insbesondere kann über das mitgeführte digitale Netzwerk auch ein Service-Kanal zur Master-Einheit eingerichtet sein.

Die Master-Downlink-Schnittstelle und die Master-Uplink-Schnittstelle dienen zur Kommunikation der Master-Einheit mit der Basisstation in Downlink- bzw. in Uplink-Richtung. Entsprechend sind die Remote-Downlink-Schnittstelle und die Remote-Uplink-Schnittstelle zur Kommunikation zwischen der Remote-Einheit und dem Endgerät in Downlink- bzw. in Uplink-Richtung vorgesehen. Der Master-Downlink-Combiner führt die einzelnen Signalleitungen der Master-Einheit auf die gemeinsame Signal-Leitung zusammen. Entsprechend spaltet der Master-Uplink-Splitter die gemeinsame Singal-Leitung in einzelne Signalleitungen auf. Umgekehrt spaltet der Remote-Downlink-Splitter die gemeinsame Signalleitung auf, während der Remote-Uplink-Combiner die einzelnen Singalleitungen zu einer gemeinsamen Signalleitung kombiniert.

Um in der Master-Einheit in Uplink-Richtung aus der gemeinsamen Signalleitung das Datensignal des digitalen Netzwerks zu entnehmen, ist das Mastermodem vorgesehen, das zur Taktung das Referenzsignal verwendet. Zur Modulation/Demodulation in Downlink- und in Uplink-Richtung können insbesondere auch getrennte Modems eingesetzt werden. Ebenso können in der Remote-Einheit zur Modulation/Demodulation in Downlink- und in Uplink-Richtung getrennte Remote-Modems verwendet sein, die jeweils mit dem Referenzfrequenzempfänger zur Taktung verbunden sind.

In einer vorteilhaften Ausgestaltung der Master-Einheit ist der Referenzfrequenzgeber ausgebildet, ein Referenzfrequenzsignal geringer Signalstärke mit einem unter Berücksichtigung von Oberwellen und Intermodulationsprodukten genügenden Störabstand zu den übrigen Frequenzbändern der Übertragungssignale zu erzeugen. Damit ist sichergestellt, dass das mitübertragene Referenzfrequenzsignal selbst nicht zu Intermodulationseffekten beiträgt. Auch mit einer geringen Signalstärke lässt sich auf der Remote-Seite das Referenzfrequenzsignal aufgrund seiner einfachen und spezifischen Charakteristik leicht wieder herstellen bzw. erkennen. Das Referenzfrequenzsignal wird in der einfachsten Variante als ein Sinus-Signal übertragen.

In einer weiter vorteilhaften Ausgestaltung ist dem Referenzfrequenzgeber in der Master-Einheit ein Spreizsequenzerzeuger nachgeschaltet, der zur Spreizung des Datensignals des Mastermodems eingesetzt ist. Mit anderen Worten wird der Referenzfrequenzgeber zur Taktung des Spreizsequenzerzeugers herangezogen. Der Spreizsequenzerzeuger generiert eine Spreizsequenz oder einen Spreizcode. Mittels der Spreizsequenz oder des Spreizcodes wird das Datensignal des Mastermodems gespreizt, wodurch die Bandbreite des Datensignals charakteristisch vergrößert wird. Aus dem gespreizten Signal kann selbst bei relativ niedriger Intensität das ursprüngliche Signal aus einem Rauschhintergrund wieder problemlos entnommen werden.

In einer weiter bevorzugten Ausgestaltung ist der Spreizsequenzerzeuger zur Spreizung des Referenzfrequenzsignals selbst eingesetzt. Somit wird das Referenzfrequenzsignal mit denselben Vorteilen übertragen, wie sie soeben für das Datensignal geschildert wurden. Insbesondere kann die Intensität des Referenzfrequenzsignals weiter abgesenkt werden. Das Referenzfrequenzsignal kann problemlos aus einem Hintergrundrauschen regeneriert werden.

Grundsätzlich können das Mastermodem oder das Remotemodem zu einer beliebigen Modulation der Trägerfrequenz bzw. Demodulation aus der Trägerfrequenz eingesetzt sein. Besonders bevorzugt sind jedoch das Mastermodem und das Remotemodem zu einer QAM- oder einer FSK-Modulation/Demodulation ausgebildet. Bei der QAM-Modulation werden die digitalen Daten auf zwei phasenverschobene Signale gleicher Trägerfrequenz aufmoduliert. Die phasenverschobenen Signale werden anschließend addiert. Über die Quadratur-AmplitudenModulation (QAM) lassen sich digitale Daten mit hoher Qualität über eine Trägerfrequenz übertragen. Je nach Anzahl der codierten Zustände spricht man auch von einer 4- (2 Bit), 8- (3 Bit), 16- (4 Bit) oder allgemein Multi-QAM-Modulation. Zur Demodulation ist das Trägersignal in gleicher Phase entsprechend der Modulation notwendig. Dies geschieht vorliegend über die Übertragung des Referenzfrequenzsignals über die gemeinsame Signalleitung. Bei der FSK-Modulation (frequency-shiftkeying) werden gegebenen digitalen Symbolen oder Bitfolgen unterschiedliche Frequenzen zugeordnet. Entsprechend wird die Trägerfrequenz moduliert. Im einfachsten Fall findet die Modulation mit zwei unterschiedlichen Frequenzen statt. Bei mehreren Frequenzen spricht man von einer Multi-FSK-Modulation.

In der einfachsten Ausgestaltung werden - wie erwähnt - die Signale verschiedener Standards der mobilen Kommunikationsnetzwerke gleichfrequent übertragen. In der Master-Einheit ist vorliegend ein mit dem Referenzfrequenzgeber verbundener Frequenzmischer umfasst, der in Uplink-Richtung einer Anzahl der Signalleitungen aus dem Master-Uplink-Splitter und in Downlink-Richtung einer Anzahl der Signalleitungen in den Master-Downlink-Combiner zugeordnet ist, wobei der Frequenzmischer dazu eingerichtet ist, in Downlink-Richtung eine Anzahl überlagernder Frequenzbänder der Übertragungssignale in freie Zwischenfrequenzbänder umzusetzen und in Uplink-Richtung eine Anzahl umgesetzter Zwischenfrequenzbänder erneut umzusetzen.

Entsprechend ist in der Remote-Einheit ein mit dem Referenzfrequenzempfänger verbundener Frequenzmischer umfasst, der in Downlink-Richtung einer Anzahl der Signalleitungen aus dem Master-Downlink-Splitter und in Uplink-Richtung einer Anzahl der Signalleitungen in den Master-Uplink-Combiner zugeordnet ist, und wobei der Frequenzmischer dazu eingerichtet ist, in Uplink-Richtung eine Anzahl überlagernder Frequenzbänder der Übertragungssignale in freie Zwischenfrequenzbänder umzusetzen und in Downlink-Richtung eine Anzahl umgesetzter Zwischenfrequenzbänder erneut umzusetzen.

Ein solcher Frequenzmischer bzw. Frequenzentmischer ist beispielsweise über einen Frequenzgenerator oder Synthesizer zu bewerkstelligen, der über das Referenzfrequenzsignal getaktet ist. In der Master-Einheit wird das Referenzfrequenzsignal dem Referenzfrequenzgeber entnommen. In der Remote-Einheit wird das Referenzfrequenzsignal mittels des Referenzfrequenzsignalempfängers gewonnen. Durch Frequenzmischung wird dann die Frequenz des gewünschten Signals in eine geeignete andere Frequenz konvertiert oder umgesetzt. In der Master-Einheit werden dann in Uplink-Richtung die von der Remote-Einheit erhaltenen frequenzkonvertierten Signale erneut konvertiert. Ebenso geschieht dies in Downlink-Richtung in der Remote-Einheit. Dabei muss die Frequenz der konvertierten Signale nicht notwendigerweise wieder in die Ursprungsfrequenz zurückgesetzt werden. Ebenso gut ist es möglich, die konvertierten Signale in ein anderes Frequenzband umzusetzen. Auf diese Weise kann beispielsweise ein Übertragungsstandard in ein anderes Kommunikationsband verschoben werden.

Für die Frequenzumsetzung und Frequenzrücksetzung in Uplink- oder Downlink-Richtung können insbesondere getrennte Frequenzmischer eingesetzt sein. Diese werden jeweils durch das Referenzsignal synchronisiert.

Eine Frequenzumsetzung wie vorbeschrieben empfiehlt sich beispielsweise, wenn zwei getrennte Signale innerhalb von Frequenzbändern übertragen werden, die sich überlappen oder bei denen zumindest die Gefahr einer Intermodulation besteht. Um eine solche Intermodulation in einem mittels Frequenzmultiplex übertragenen Signal zu vermeiden, ist vorgesehen, überlagernde Frequenzbänder der Übertragungssignale in freie Zwischenfrequenzbänder umzusetzen. Dabei ist davon ausgegangen, dass zwischen den Frequenzbändern der Standards zur Übertragung drahtloser Information zur Vermeidung von Überlappeffekten solche freien Zwischenbänder mit ausreichend großer Breite bzw. Abstand vorgesehen sind. Durch die beschriebene Vorgehensweise werden die bislang freien Zwischenbänder zur Übertragung von Signalen sich überlagernder Frequenzbänder genutzt. Mit anderen Worten werden überlagernde Frequenzbänder verschiedener Signale auf die freien Zwischenbänder verteilt, so dass es insgesamt zu einer deutlichen Verringerung von Intermodulationseffekten etc. kommt. Bevorzugt kann dabei bei einer Anzahl n von überlagernden Frequenzbändern nur eine Anzahl von n-1 in freie Zwischenfrequenzbänder umgesetzt werden, während eines dieser Signale auf seiner Frequenz ohne Umsetzung durchgeführt ist. Die Intermodulationsproblematik ist hierbei mit geringerem Aufwand in gleichem Maße vermieden.

Die vorgenannte Situation liegt insbesondere dann vor, wenn Gleichfrequenz-Signale unterschiedlichen Informationsgehalts, insbesondere so genannte MIMO-Signale übertragen werden sollen. Solche Signale, die beispielsweise aus unterschiedlichen Sektoren stammen oder wie im Falle von MIMO über räumlich getrennte Antennen empfangen werden, werden innerhalb desselben Frequenzbandes übertragen, sind jedoch aufgrund auf der Empfängerseite voneinander zu separieren.

Vorliegend ist somit in der Master-Einheit der oder die Frequenzmischer zur Frequenzumsetzung und Frequenzrücksetzung der Gleichfrequenz-Signale den Signalleitungen der Gleichfrequenz-Signale zugeordnet, wobei die übrigen Frequenzbänder auf ihrer Frequenz ohne Konvertierung durchgeführt sind.

Entsprechend ist in der Remote-Einheit der Frequenzmischer zur Frequenzumsetzung und Frequenzrücksetzung der Gleichfrequenz-Signale den Signalleitungen der Gleichfrequenz-Signale zugeordnet, wobei die übrigen Frequenzbänder frequenzgleich ohne Konvertierung durchgeführt sind.

Durch diese Ausgestaltung wird erreicht, dass die Gleichfrequenz-Signale, insbesondere MIMO-Signale, zur Übertragung über die gemeinsame Signalleitung zwischen der Master-Einheit und der Remote-Einheit getrennt voneinander in freie Zwischenfrequenzbänder umgesetzt sind. Damit treten bei der Übertragung keine Modulationseffekte auf. Die Gleichfrequenz-Signale können insbesondere von den Signalen desselben Standards und voneinander selbst nach der Übertragung über die gemeinsame Signalleitung wieder separiert werden. Wie bereits beschrieben, wird hierzu sowohl zur Frequenzmischung als auch zur Frequenzentmischung jeweils das mit übertragene bzw. in der Master-Einheit generierte Referenzfrequenzsignal herangezogen.

Vorteilhafterweise ist weiter das Mastermodem zur Übertragung digitaler Basisbanddaten auf der gemeinsamen Signalleitung ausgebildet. Entsprechend ist bevorzugt in der Remote-Einheit das Remotemodem ebenfalls zur Übertragung digitaler Basisbanddaten auf der gemeinsamen Signalleitung ausgebildet. Dabei werden die Daten mit derselben Frequenz übertragen, die sie als Zeitsignal aufweisen. Ein Beispiel hierfür ist das Ethernet. Die darin enthaltenen digitalen Daten werden mittels eines Zeitmultiplex-Verfahrens übertragen. Die Zuweisung zu einzelnen Geräten oder Adressen geschieht hierbei über eine Kanalcodierung.

Um bei einer Punkt-zu-Mehrpunkt-Verbindung sicherzustellen, dass die Remote-Einheiten zeitgleich senden, so dass alle damit verbundenen oder angeschlossenen Geräte synchronisiert sind, ist von der oder jeder Remote-Einheit eine Anzahl von einstellbaren Verzögerungsgliedern zur Verzögerung der Übertragungssignale umfasst. Damit kann Rücksicht auf die unterschiedlich langen Übertragungsstrecken zwischen der Master-Einheit und den verschiedenen Remote-Einheiten genommen werden.

In einer bevorzugten Ausgestaltung des mittels Master-Einheit und Remote-Einheit verwirklichten Multiband-Übertragungssystems ist die zentrale Signal-Leitung ein Lichtwellenleiter, wobei der Remote-Einheit und der Master-Einheit jeweils eine optoelektrische Wandlereinheit zur jeweiligen Umwandlung der Übertragungssignale zwischen ihrer elektrischen und optischen Modifikation zugeordnet ist.

Ausführungsbeispiele der Erfindung werden anhand einer Zeichnung näher erläutert. Dabei zeigen:
- Fig. 1: schematisch den Übertragungspfad zwischen einer Master-Einheit und einer Remote-Einheit in Downlink-Richtung, und
- Fig. 2: schematisch den Aufbau einer Master-Einheit.

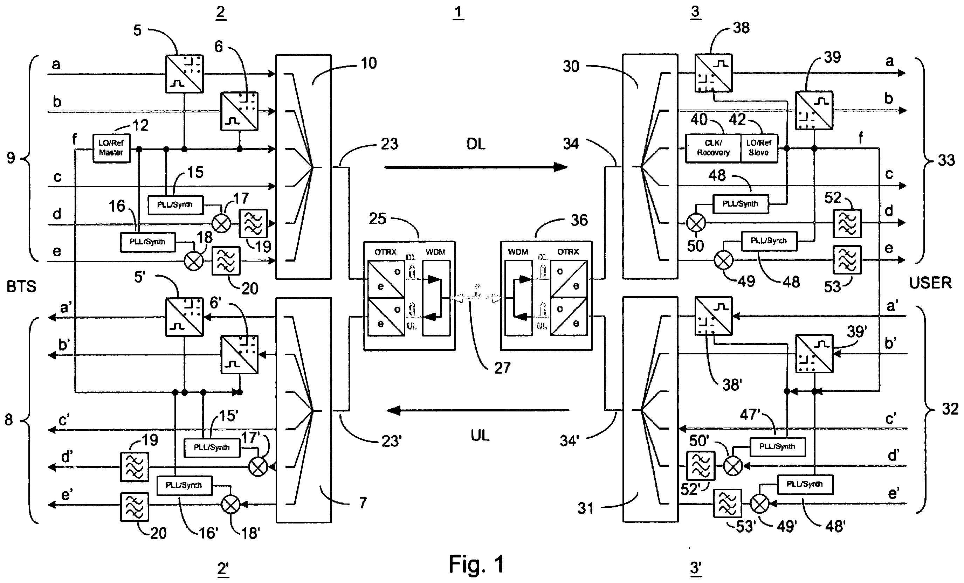

In Fig. 1 ist schematisch die gemeinsame Übertragung von Signalen zweier digitaler Netzwerke und von Signalen dreier drahtloser Kommunikationsnetzwerke zwischen einer Master-Einheit 2, 2' und einer Remote-Einheit 3,3' dargestellt. Die Master-Einheit 2, 2' und die Remote-Einheit 3, 3' bilden gemeinsam ein Multiband-Übertragungssystem 1 zur Verteilung und Zusammenführung von Signalen mindestens eines drahtlosen Kommunikationsnetzes und mindestens eines digitalen Netzwerks. Der Downlink-Bereich ist hierbei mit 2, 3 bezeichnet, während der Uplink-Bereich durch 2' und 3' angegeben ist.

Die Master-Einheit 2, 2' umfasst hierbei Signalleitungen a, b bzw. a', b' zur Übermittlung oder zum Austausch von Signalen innerhalb jeweils eines digitalen Netzwerks. Die digitalen Daten werden hierbei vor der Übertragung mittels eines ersten Mastermodems 5 und mittels eines zweiten Mastermodems 6 auf eine Trägerfrequenz moduliert. Beide Mastermodems 5, 6 sind hierbei zu einer Multi-QAM-Modulation ausgebildet. In Uplink-Richtung sind zur Demodulation der entsprechenden aus der Remote-Einheit 3, 3' stammenden modulierten digitalen Signale die weiteren Mastermodems 5' und 6' vorgesehen.

Weiter sind von der Master-Einheit 2, 2' drei Signalleitungen c, d und e bzw. c', d' und e' umfasst, die über Funk oder Kabel mit der Basisstation BTS eines drahtlosen Kommunikationsnetzes in Verbindung stehen. Die drei Signalleitungen c, d und e bzw. c', d' und e' sind dabei jeweils Signalen unterschiedlicher Mobilfunk-Standards zugeordnet. Insbesondere kann dies LTE, UMTS, DCS oder GSM sein.

Die Signalleitungen a bis e bzw. a' bis e' sind Teil einer Master-Downlink-Schnittstelle 9 bzw. Teil einer Master-Uplink-Schnittstelle 8. Über diese Schnittstellen 8 und 9 erfolgt die Ankopplung der Master-Einheit 2, 2' an die Basisstation BTS und an die beiden digitalen Netzwerke. Ebenso sind die Master-Downlink-Schnittstelle 9 und die Master Uplink-Schnittstelle 8 zur Kommunikation mit der Remote-Einheit 3, 3' eingerichtet.

Die Master-Einheit 2, 2' weist weiter einen Referenzfrequenzgeber 12 auf, beispielsweise einen Schwingquarz, der ausgangsseitig ein zur Taktung herangezogenes Referenzfrequenzsignal erzeugt. Die Ausgangsleitung des Referenzfrequenzgebers 12 ist mit f bezeichnet.

Von der Signalleitung f wird das Referenzfrequenzsignal des Referenzfrequenzgebers 12 für die beiden Mastermodems 5, 6 bzw. 5' 6' abgezweigt. Dabei kann insbesondere vorgesehen sein, das Referenzfrequenzsignal selbst beispielsweise über eine Vervielfachung oder eine Teilung in eine andere Trägerfrequenz der Mastermodems 5, 6 bzw. 5' 6'umzusetzen.

Den Signalleitungen d und e sowie d' und e' ist jeweils ein erster Frequenzgenerator 15 und 15' bzw. ein zweiter Frequenzgenerator 16 und 16' zugeordnet, die ausgangsseitig über einen ersten Frequenzmischer 17 und 17' bzw. einen zweiten Frequenzmischer 18 und 18' den Signalleitungen d und e sowie d' und e' zugeordnet sind. Mittels der Frequenzmischer 17,18 werden die Frequenzen der in den Signalleitungen d und e in Downlink-Richtung laufenden Signale frequenzkonvertiert, insbesondere in freie Zwischenbänder zwischen den einzelnen Übertragungsstandards umgesetzt. Insbesondere kann es sich bei den Signalen in den Signalleitungen d und e um so genannte MIMO-Signale innerhalb eines Standards handeln, die aus räumlich getrennten Antennen stammen. Die beiden MIMO-Signale werden in der Master-Einheit 2, 2' in freie Zwischenbänder umgesetzt, so dass eine Intermodulation mit anderen Signalen vermieden ist und die beiden MIMO-Signale auf der Remote-Seite wieder problemlos voneinander getrennt werden können. Um beim Frequenzmischen das gewünschte Frequenzband zu separieren, sind in den Signalleitungen d und e den Frequenzmischern 17 bzw.18 ein erster bzw. ein zweiter Bandpassfilter 19,20 nachgeschaltet. Umgekehrt werden mit den beiden Frequenzmischern 17' und 18' durch Frequenzmischung in Uplink-Richtung die in freie Zwischenfrequenzbänder umgesetzten Signale dieser Signalleitung wieder in die ursprüngliche Frequenz zurückgesetzt.

Die QAM-modulierten Signale der beiden digitalen Datenkanäle a und b, das Referenzfrequenzsignal in der Signalleitung f, das gleichfrequente Signal der Signal-leitung c sowie die frequenzumgesetzten Signale der Signalleitungen d und e werden im Master-Downlink-Combiner 10 in eine gemeinsame Signal-Leitung 23 zusammengeführt. In Downlink-Richtung DL werden die Signale der gemeinsamen Signalleitung 23 weiter in einer Master-Übertragungseinheit 25 über eine optoelektrische Wandlereinheit 25 in optische Signale umgesetzt und über einen Lichtwellenleiter 27 der Remote-Einheit 3 zugeführt.

Die Remote-Einheit 3, 3' umfasst eine Remote-Downlink-Schnittstelle 33 sowie eine Remote-Uplink-Schnittstelle 32, die grundsätzlich der Verbindung mit einem Endnutzer USER dienen. Beide Schnittstellen 33 und 32 der Remote-Einheit 3, 3' münden über die Signalleitungen 34, 34' in einer gemeinsamen Remote-Übertragungseinheit 36, in die der Lichtwellenleiter 27 der Master-Einheit 2, 2' geführt ist.

In der Remote Übertragungseinheit 36 werden die empfangenen und die zu sendenden Signale des Lichtwellenleiters 27 in elektrische bzw. in optische Signale umgewandelt. Diese laufen bzw. kommen über die Signalleitung 34 bzw. 34' in einen Remote-Downlink-Splitter 30 bzw. einen Remote-Uplink-Combiner 31, in der sie beispielsweise mittels geeigneter Filter voneinander getrennt und in entsprechender Zuordnung gemäß der Master-Einheit 2 bzw. 2' auf die Signalleitungen a-e bzw. a'-e' der Remote-Einheit 3 bzw. 3' aufgeteilt werden.

Der Signalleitung f wird das mitübertragene Referenzfrequenzsignal des Referenzfrequenzgebers 12 (in der Master-Einheit 2) entnommen bzw. aus der Übertragungsfrequenz (beispielsweise spreizbandcodiert) wiederhergestellt. Dies geschieht mittels eines Referenzfrequenzempfängers 40 und eines nachgeschalteten in Slave-Betrieb arbeitenden Frequenzgebers 42. Die wiederhergestellte eigentliche Referenzfrequenz wird über die Signalleitung f einem ersten Remote-modem 38, 38' und einem zweiten Remotemodem 39, 39' zugeleitet. Mittels der Referenzfrequenz werden dort die jeweils QAM-modulierten Signale demoduliert bzw. moduliert. Entsprechend liegen in den Signalleitungen a und b in Downlink-Richtung wieder die Signale der beiden digitalen Netzwerke vor.

Der Signalleitung c kann das gleichfrequente Signal wie auf Seiten der Master-Einheit 2 vorgesehen, entnommen werden.
In die Signalleitung c' kann das gleichfrequente Signal in Uplink-Richtung zur Übertragung zur Master-Einheit 2,2' eingespeist werden.

Über einen ersten und einen zweiten Bandpassfilter 52, 53 werden die in Seitenbänder umgesetzten Downlink-Signale der Signalleitungen d und e entnommen. Über die die wiederhergestellte Referenzfrequenz erhaltenden, als Synthesizer ausgestalteten Frequenzgeneratoren 47, 48 sowie damit verbundene Frequenzentmischer 49, 50 werden die Signale wieder in die ursprüngliche Frequenz des Übertragungsstandards zurückversetzt.

In Uplink-Richtung werden die eingehenden Signale auf den Signalleitungen d' und e' mit Hilfe der Frequenzumsetzer 50' und 49' in nicht überlappende Frequenzbänder umgesetzt. Nach der Filterung durch die Bandpassfilter 52' und 53' werden die Signale d' und e' mit dem gleichfrequenten Signal c' sowie den Uplink-Signalen der Remote-Modems 38' und 39' zusammengeführt.

Über die beiden Signalleitungen a und b bzw. a' und b' kann der Endnutzer digitale Daten austauschen. Beispielsweise kann er über Ethernet einzelne Geräte auf Seiten der Master-Einheit 2, 2' ansprechen. Insbesondere ist eine Adressierung der Master-Einheit 2 bzw. 2' selbst möglich, so dass deren Programmierung über einen Zugang auf der Remote-Einheit 3, 3' möglich wird.

Die Signalleitungen c, d und e bzw. c', d' und e' werden entsprechenden Antennen zur drahtlosen Kommunikation aufgeschaltet. Der Endnutzer kann mit einem mobilen Endgerät bidirektional kommunizieren.

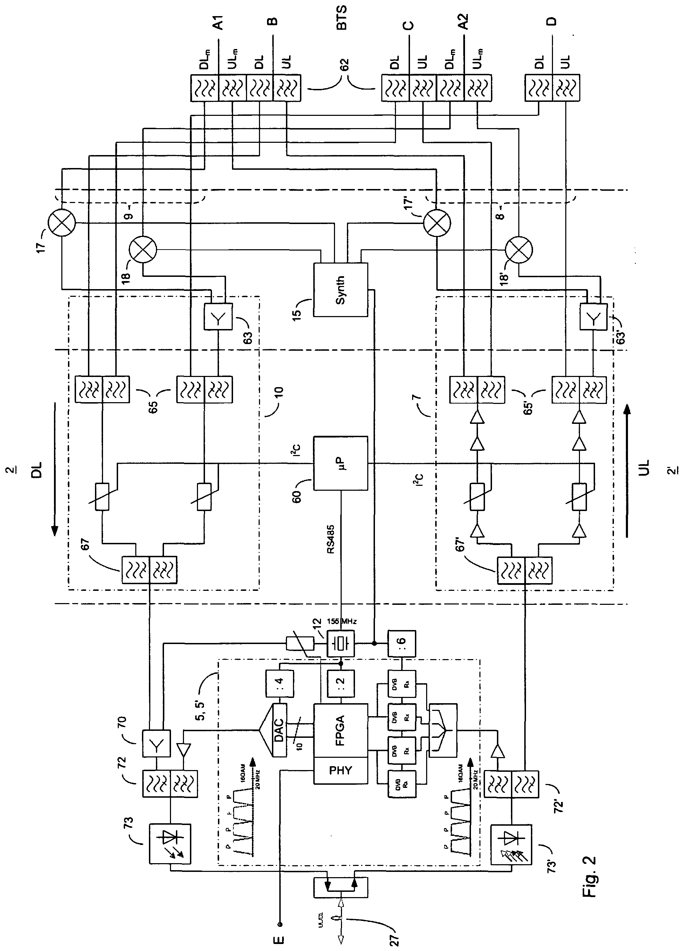

In Fig. 2 ist schematisch die Anordnung einzelner Komponenten einer Master-Einheit 2,2' dargestellt, die in etwa der in Fig. 1 gezeigten Master-Einheit entspricht. Dabei ist die Orientierung der Master-Einheit 2, 2' gegenüber der Master-Einheit entsprechend Fig. 1 geändert. In Fig. 2 befindet sich die zugeordnete Basisstation BTS auf der rechten Seite.

Auf der linken Seite erkennt man den Lichtwellenleiter 27, auf dem alle Signale nach dem Frequenzmultiplex-Verfahren (FDD) bidirektional mit einer Remote-Einheit ausgetauscht werden.

Zur Übertragung digitaler Daten bzw. von Signalen eines digitalen Netzwerkes ist ein Mastermodem 5, 5' vorgesehen. Dieses Mastermodem umfasst eine physikalische Schnittstelle PHY ins digitale Netzwerk zur Wandlung von codierten Signalen auf dem physikalischen Trägermedium des Netzwerkes in digitale Nutzdaten in Empfangsrichtung und in Senderichtung die Umsetzung digitaler Nutzdaten in ein codiertes Signal für das entsprechende Trägermedium. Über ein Field Programmable Gate Array (FPGA) und mittels eines Digital-Analog-Converters (DAC) werden die erhaltenen digitalen Nutzdaten aus dem digitalen Netzwerk moduliert und als moduliertes Frequenzsignal zur Übertragung mit anderen Signalen kombiniert. Als Modulation ist eine Quadratur Amplituden Modulation (QAM) vorgesehen. Auf der Empfangsseite wird ein moduliertes Frequenzsignal mittels eines Analog-Digital-Convertes (ADC) empfangen und mit einer entsprechenden Empfängerlogik demoduliert. Vorliegend ist Übertragung der digitalen Nutzdaten gemäß des DVB-C Standards vorgesehen.

Zur Taktung des Mastermodems 5, 5' ist in der Master-Einheit 2, 2' ein Referenzfrequenzgeber 12 vorgesehen, der vorliegend als ein Schwingquarz ausgebildete ist. Über entsprechende Teilung werden hieraus die für die Modulation /Demodulation benötigten Frequenzen abgeleitet. Der Referenzfrequenzgeber 12 dient zugleich zur Taktung eines Frequenzgenerators 15, der vorliegend als ein Synthesizer ausgebildet ist.

Weiter umfasst die Master-Einheit 2, 2' einen Prozessor 60, der über Bus-Leitungen die Pegelung der Signalpfade des drahtlosen Kommunikationsnetzwerkes kontrolliert. Ferner obliegt es diesem Prozessor 60, sämtliche Betriebseinstellungen vorzunehmen und mögliche Fehler- bzw. Betriebsinformationen zu sammeln. Wie auch der entsprechende Prozessor in der Remote-Einheit ist dieser Prozessor 60 über einen Ethernet-Link mit einer zentralen Steuer und Überwachungseinheit verbunden.

Die zur Zusammenführung der Downlink-Signale bzw. Trennung der Uplink-Signale verwendeten Downlink-Combiner und Uplink-Splitter umfassen eine Reihe von ersten Duplexer-Einheiten 65, 67 bzw. 65', 67', die Übertragungsbändern der verschiedenen drahtlosen Komminikationssysteme zugeordnet sind. Die Duplexer-Einheiten 65, 67, 65', 67' haben die Aufgabe, die Signale band-spezifisch für eine geeignete Übertragung auf der optischen Strecke, in Downlink-Richtung zu dämpfen und in Uplink-Richtung zu verstärken.

Da der Anschluss an die Basisstation BTS der verschiedenen drahtlosen Kommunikationsnetze über eine kombinierte Leitung/ Antenne erfolgt, müssen die zusammengehörigen Downlink- und Uplink-Signale in den Duplexer-Einheiten 62, gemäß dem FDD-Verfahren getrennt bzw. zusammengeführt werden. Der Master-Uplink- 8 bzw. Master-Downlink Schnittstelle 9 sind hierbei eine erste Antenne A1 und eine zweite Antenne A2 zum Empfangen/ Aussenden von MIMO-Signalen, eine Antenne B zum Empfangen/Aussenden von UMTS-Signalen, eine Antenne C zum Empfangen/Aussenden von DCS-Signalen und eine Antenne D zum Empfangen/Aussenden von GSM-Signalen zugeordnet. Über den Anschluss E kann eine Verbindung zu einem digitalen Netzwerk hergestellt werden. Mit anderen Worten ist die MasterEinheit 2, 2' für ein Multiband-Übertragungssystem konfiguriert.

Betrachtet man den Signallauf in Downlink-Richtung DL werden die empfangenen Signale der MIMO-Antennen A1 und A2 mittels der Frequenzmischer 17,18, die an Ausgängen des Frequenzgenerators 15 angeschlossen sind, in freie Zwischenfrequenzbänder zwischen den einzelnen Standards konvertiert. Die übrigen Signale der genannten Standards der mobilen Kommunikation werden gleichfrequent fortgeführt. Mittels eines Kopplungselements 63 werden die frequenzkonvertierten MIMO-Signale zusammengeschaltet.

Über die zweiten Duplexer-Einheiten 65 werden jeweils unerwünschte Seitenbänder entfernt. Die Signale gemäß UMTS und gemäß DCS werden in Downlink-Richtung DL zusammengeführt. Ebenso werden die MIMO-Signale sowie die Signale gemäß GSM in Downlink-Richtung zusammengefasst.

In den dritten Duplexer-Einheiten 67 werden erneut Seitenbänder unterdrückt, bwz. die unerwünschten größeren bzw. kleineren Frequenzen entfernt. Danach sind in Downlink-Richtung DL sämtliche Signale der drahtlosen Kommunikationsnetzdienste zusammengeführt.

Mittels des Kopplungselements 70 werden in Downlink-Richtung weiter die gemeinsamen Signale mit dem Referenzfrequenzsignal des Referenzfrequenzgebers 12 zusammengeführt. Über vierte Duplexer-Einheiten 72 werden jeweils störende größere bzw. kleinere Frequenzen unterdrückt. Insbesondere werden die Signale eines oder mehrerer digitaler Netzwerke als Datensignale des Mastermodems 5 aufgeschaltet.

Über eine optoelektrische Wandlereinheit 73 werden sämtliche elektrischen frequenz-multiplexten Signale in optische Signale umgesetzt und dem Lichtwellenleiter 27 zugeführt. Über den Lichtwellenleiter 27 werden alle Signale einer angeschlossenen Remote-Einheit zugeführt.

In Uplink-Richtung UL werden die erhaltenen Signale zunächst mittels der optoelektrischen Wandlereinheit 73' in elektrische Signale umgesetzt. Mittels der vierten Duplexer-Einheiten 72' werden die Signale eines oder mehrerer digitaler Netzwerke entkoppelt und das modulierte Frequenzsignal dem Mastermodem 5 zugeführt.

Die übrigen Signale der drahtlosen Kommunikationsnetzwerke werden zunächst über die dritten Duplexer-Einheiten 67' auf zwei Frequenzbänder aufgeteilt. Über die zweiten Duplexer-Einheiten 65' geschieht die weitere Aufteilung auf die insgesamt vier Signale unterschiedlicher Frequenzbänder der übertragenen Standards. Mittels eines Teilers 63' werden die beiden MIMO-Signale auf zwei Mischstufen aufgeteilt. Die MIMO-Signale werden dann mittels der Frequenzentmischer 17', 18' in die ursprünglichen Frequenzbänder zurückgesetzt. Alle Signale laufen schließlich den entsprechenden Antennen zur Abstrahlung oder den Antennenanschlüssen der BTS zu.

### Bezugszeichenliste

- 1: Multiband-Übertragungssystem
- 2,2': Master-Einheit
- 3,3': Remote-Einheit
- 5,5': erstes Mastermodem
- 6,6': zweites Mastermodem
- 7: Master-Uplink-Splitter
- 8: Master-Uplink- Schnittstelle
- 9: Master-Downlink- Schnittstelle
- 10: Master-Downlink-Combiner
- 12: Referenzfrequenzgeber
- 15,15': erster Frequenzgenerator
- 16,16': zweiter Frequenzgenerator
- 17,17': erster Frequenzmischer
- 18,18': zweiter Frequenzmischer
- 19: erster Bandpassfilter
- 20: zweiter Bandpassfilter
- 23: gemeinsame Signal-Leitung (Master)
- 25: Master Übertragungseinheit
- 27: Lichtwellenleiter
- 30: Remote-Downlink-Splitter
- 31: Remote-Uplink-Combiner
- 32: Remote-Uplink-Schnittstelle
- 33: Remote-Downlink-Schnittstelle
- 34: gemeinsame Signal-Leitung (Remote)
- 36: Remote Übertragungseinheit
- 38,38': erstes Remote-Modem
- 39,39': zweites Remote-Modem
- 40: Referenzfrequenzempfänger
- 42: Frequenzgeber
- 47,47': erster Frequenzgenerator
- 48,48': zweiter Frequenzgenerator
- 49,49': erster Frequenzentmischer
- 50,50': zweiter Frequenzentmischer
- 52: erstes Bandpassfilter
- 53: zweiter Bandpassfilter
- 60: Prozessor
- 62,62': erste Duplexereinheiten
- 63: Kopplungselement
- 65,65': zweite Duplexereinheiten
- 67,67': dritte Duplexereinheiten
- 70: Kopplungselement
- 72,72': vierte Duplexereinheiten
- 73,73': elektrooptische Wandlereinheiten

- A1: erste Antenne-Anschluss MIMO
- A2: zweite Antenne-Anschluss MIMO
- B: Antenne-Anschluss UMTS
- C: Antenne-Anschluss DCS
- D: Antenne-Anschluss GSM
- E: Anschluss des digitalen Netzwerks

- a-e,a'-e': Signalleitungen
- f: Referenzsignalleitung
- PHY: Schnittstelle digital/moduliert analog
- FPGA: Schaltkreis digital
- UL: Uplink-Richtung
- DL: Downlink-Richtung
- BTS: Basisstation
- USER: Nutzer

## Patentansprüche

1. Master-Einheit (2, 2') zur Verteilung und Zusammenführung von Signalen mindestens eines drahtlosen Kommunikationsnetzes und
mindestens eines digitalen Netzwerks,
umfassend ein erstes Downlink-Mastermodem (5), ein erstes Uplink-Mastermodem (5'), ein zweites Downlink-Mastermodem (6), ein zweites Uplink-Mastermodem (6'), eine Master-Uplink-Schnittstelle (8), eine Master-Downlink-Schnittstelle (9), einen Master-Downlink-Combiner (10), einen Master-Uplink-Splitter (7), einen Referenzfrequenzgeber (12), einen ersten Downlink-Frequenzgenerator (15), einen zweiten Downlink-Frequenzgenerator (16), einen ersten Uplink-Frequenzgenerator (15'), einen zweiten Uplink-Frequenzgenerator (16'), einen ersten Downlink-Frequenzmischer (17), einen zweiten Downlink-Frequenzmischer (18), einen ersten Uplink-Frequenzmischer (17'), einen zweiten Uplink-Frequenzmischer (18') und eine Master-Übertragungseinheit (25)
- wobei das erste Downlink-Mastermodem (5), das erste Uplink-Mastermodem (5'), das zweite Downlink-Mastermodem (6) und das zweite Uplink-Mastermodem (6') zur Kommunikation mit dem mindestens einen digitalen Netzwerk eingerichtet und mit dem Referenzfrequenzgeber (12) verbunden sind,
- wobei die Master-Downlink-Schnittstelle (9) und die Master-Uplink-Schnittstelle (8) zur Kommunikation mit einer Basisstation (BTS) des mindestens einen drahtlosen Kommunikationsnetzes eingerichtet sind,
- wobei der Master-Downlink-Combiner (10) und der Master-Uplink-Splitter (7) zur Verbindung mit mindestens einer Remote-Einheit (3, 3') eingerichtet sind,
- wobei in Downlink-Richtung (DL) Downlink-Signalleitungen (a-e) im Master-Downlink-Combiner (10) zu einer gemeinsamen Downlink-Signalleitung (23) zusammengeführt sind, auf die das Referenzfrequenzsignal des Referenzfrequenzgebers (12) und ein Datensignal des Mastermodems (5, 6) aufgeschaltet sind, und die gemeinsame Downlink-Signalleitung (23) in die Master-Übertragungseinheit (25) geführt ist,
- wobei in Uplink-Richtung (UL) aus einer gemeinsamen Uplink-Signalleitung (23') im Master-Uplink-Splitter (7) Uplink-Signalleitungen (a'-e') aufgespalten sind und ein Datensignal des wenigstens einen digitalen Netzwerks ausgekoppelt und dem ersten Uplink-Mastermodem (5') und dem zweiten Uplink-Mastermodem (6') zugeführt ist,
- wobei zur Taktung des ersten Downlink-Mastermodems (5), des ersten Uplink-Mastermodems (5'), des zweiten Downlink-Mastermodems (6) und des zweiten Uplink-Mastermodem (6') das Referenzfrequenzsignal des Referenzfrequenzgebers (12) verwendet ist,
- wobei das Referenzfrequenzsignal zugleich zur Taktung des ersten Downlink-Frequenzgenerators (15), des zweiten Downlink-Frequenzgenerators (16), des ersten Uplink-Frequenzgenerators (15') und des zweiten Uplink-Frequenzgenerators (16') dient,
- wobei der erste Downlink-Frequenzgenerator (15) ausgebildet ist zur Frequenzumsetzung in Downlink-Richtung (DL), der zweite Downlink-Frequenzgenerator (16) zur Frequenzumsetzung in Downlink-Richtung (DL), der erste Uplink-Frequenzgenerator (15') zur Frequenzumsetzung in Uplink-Richtung (UL), der zweite Uplink-Frequenzgenerator (16') zur Frequenzumsetzung in Uplink-Richtung (UL),
- wobei der erste Uplink-Frequenzmischer (17') einer ersten Uplink-Signalleitung (d') der Uplink-Signalleitungen (a' - e') vom Master-Uplink-Splitter (7) zugeordnet ist,
- wobei der zweite Uplink-Frequenzmischer (18') einer zweiten Uplink-Signalleitung (e') der Uplink-Signalleitungen (a' - e') vom Master-Uplink-Splitter (7) zugeordnet ist,
- wobei der erste Downlink-Frequenzmischer (17) in der Downlink-Richtung (DL) einer ersten Downlink-Signalleitung (d) der Downlink-Signalleitungen (a - e) vom Master-Downlink-Combiner (10) zugeordnet ist,
- wobei der zweite Downlink-Frequenzmischer (18) in der Downlink-Richtung (DL) einer zweiten Downlink-Signalleitung (e) der Downlink-Signalleitungen (a - e) vom Master-Downlink-Combiner (10) zugeordnet ist,
- wobei der erste Downlink-Frequenzmischer (17) und der zweite Downlink-Frequenzmischer (18) ausgebildet sind, in ursprünglichen Frequenzbändern überlagerte MIMO-Übertragungssignale in Zwischenfrequenzbänder umzusetzen,
- wobei der erste Uplink-Frequenzmischer (17') und der zweite Uplink-Frequenzmischer (18') ausgebildet sind, Signale von Zwischenfrequenzbändern in ursprüngliche Frequenzbänder von MIMO-Übertragungssignalen umzusetzen und wobei die Signale der übrigen Signalleitungen ohne Konvertierung durchgeführt sind,
- wobei die Zwischenfrequenzbänder freie Frequenzbänder sind, die zwischen Frequenzbändern von Standards zur Übertragung drahtloser Information zur Vermeidung von Überlappeffekten vorgesehen sind.

2. Master-Einheit (2,2') nach Anspruch 1,
wobei dem Referenzfrequenzgeber (12) ein Spreizsequenzerzeuger nachgeschaltet ist, der zur Spreizung des Datensignals des Mastermodems (5, 5' oder 6, 6') eingesetzt ist.

3. Master-Einheit (2,2') nach Anspruch 2,
wobei der Spreizsequenzerzeuger zur Spreizung des Referenzfrequenzsignals eingesetzt ist.

4. Master-Einheit (2,2') nach einem der vorhergehenden Ansprüche,
wobei das erste Downlink-Mastermodem (5), das erste Uplink-Mastermodem (5'), das zweite Downlink-Mastermodem (6) und/oder das zweite Uplink-Mastermodem (6') zu einer QAM- oder FSK-Modulation/Demodulation ausgebildet ist beziehungsweise sind.

5. Master-Einheit (2,2') nach einem der Ansprüche 1 bis 4,
wobei der erste Downlink-Frequenzmischer (17), der erste Uplink-Frequenzmischer (17'), der zweite Downlink-Frequenzmischer (18) und der zweite Uplink-Frequenzmischer (18') eingerichtet sind, in Downlink-Richtung (DL) eine Anzahl n-1 von n sich der überlagernden Frequenzbänder der überlagerten MIMO-Übertragungssignale in Zwischenfrequenzbänder umzusetzen, und
wobei eines dieser sich überlagernder Frequenzbänder auf seiner Frequenz durchgeführt ist.

6. Master-Einheit (2,2') nach einem der vorhergehenden Ansprüche,
wobei das erste Downlink-Mastermodem (5), das erste Uplink-Mastermodem (5'), das zweite Downlink-Mastermodem (6) und/oder das zweite Uplink-Mastermodem (6') zur Übertragung digitaler Basisbanddaten auf den gemeinsamen Downlink-Signalleitung (23) und der gemeinsamen Uplink-Signalleitung (23') ausgebildet sind.

7. Remote-Einheit (3, 3')
zur Verteilung und Zusammenführung von Signalen mindestens eines drahtlosen Kommunikationsnetzes und mindestens eines digitalen Netzwerks, umfassend mindestens ein erstes Downlink-Remotemodem (38), ein zweites Downlink-Remotemodem (38'), ein erstes Uplink-Remotemodem (39), ein zweites Uplink-Remotemodem (39'), eine Remote-Uplink-Schnittstelle (32), eine Remote-Downlink-Schnittstelle (33), einen Remote-Uplink-Combiner (31), einen Remote-Downlink-Splitter (30), einen Referenzfrequenzempfänger (40), einen ersten Downlink-Frequenzgenerator (47), einen ersten Uplink-Frequenzgenerator (47'), einen zweiten Downlink-Frequenzgenerator (48), einen zweiten Uplink-Frequenzgenerator (48'), einen ersten Downlink-Frequenzmischer (50), einen ersten Uplink-Frequenzmischer (50'), einen zweiten Downlink-Frequenzmischer (49), einen zweiten Uplink-Frequenzmischer (49') und eine Remote-Übertragungseinheit (36),
- wobei das erste Downlink-Remotemodem (38), das zweite Downlink-Remotemodem (38'), das erste Uplink-Remotemodem (39) und das zweite Uplink-Remotemodem (39'), zur Kommunikation mit mindestens einem Nutzerendgerät eingerichtet und mit dem Referenzfrequenzempfänger (40) verbunden sind,
- wobei die Remote-Downlink-Schnittstelle (33) und die Remote-Uplink-Schnittstelle (32) zur Kommunikation mit einem Netzendgerät des mindestens einen drahtlosen Kommunikationsnetzes eingerichtet sind,
- wobei der Remote-Downlink-Splitter (30) und der Remote-Uplink-Combiner (31) zur Verbindung mit einer Master-Einheit (2,2') eingerichtet sind,
- wobei in Downlink-Richtung (DL) eine gemeinsame Downlink-Signalleitung (34) aus der Remote-Übertragungseinheit (36) in den Remote-Downlink-Splitter (30) geführt ist,
wobei ein Referenzfrequenzsignal und ein Datensignal des mindestens einen digitalen Netzwerks ausgekoppelt und dem Referenzsignalempfänger (40) bzw. dem ersten Downlink-Remotemodem (38) oder dem zweiten Downlink-Remotemodem (38') zugeführt sind, und die gemeinsame Downlink-Signalleitung (34) im Remote-Downlink-Splitter (30) auf eine Anzahl von Signalleitungen (a-e) aufgeteilt ist, die mit der Remote-Downlink-Schnittstelle (33) verbunden sind,
- wobei in Uplink-Richtung (UL) eine Anzahl von Uplink-Signalleitungen (a'-e') im Remote-Uplink-Combiner (31) zu einer gemeinsamen Uplink-Signalleitung (34') zusammengeführt sind, auf die das Datensignal des ersten Uplink-Remotemodems (38') oder des zweiten Uplink-Remotemodems (39') aufgeschaltet ist, und diese in Uplink-Richtung gemeinsame Uplink-Signalleitung (34') mit der Remote-Übertragungseinheit (36) verbunden ist,
- wobei das Referenzfrequenzsignal zur Taktung des ersten Downlink-Remotemodems (38), des zweiten Downlink-Remotemodems (38'), des ersten Uplink-Remotemodems (39) und des zweiten Uplink-Remotemodems (39') verwendet wird,
- wobei das Referenzfrequenzsignal zugleich zur Taktung des ersten Downlink-Frequenzgenerators (47), des ersten Uplink-Frequenzgenerators (47'), des zweiten Downlink-Frequenzgenerators (48) und des zweiten Uplink-Frequenzgenerators (48') dient,
- wobei der erste Downlink-Frequenzgenerator (47) ausgebildet ist zur Frequenzumsetzung in Downlink-Richtung (DL), wobei der zweite Downlink-Frequenzgenerator (48) ausgebildet ist zur Frequenzumsetzung in Downlink-Richtung (DL), wobei der erste Uplink-Frequenzgenerator (47') ausgebildet ist zur Frequenzumsetzung in Uplink-Richtung (UL), wobei der zweite Uplink-Frequenzgenerator (48') ausgebildet ist zur Frequenzumsetzung in Uplink-Richtung (UL),
- wobei der erste Downlink-Frequenzmischer (50) einer ersten Downlink-Signalleitung (d) der Downlink-Signalleitungen (a - e) vom Remote-Downlink-Splitter (30) zugeordnet ist,
- wobei der zweite Downlink-Frequenzmischer (49) einer zweiten Downlink-Signalleitung (e) der Downlink-Signalleitungen (a - e) vom Remote-Downlink-Splitter (30) zugeordnet ist,
- wobei der erste Uplink-Frequenzmischer (50') in der Uplink-Richtung (UL) einer ersten Uplink-Signalleitung (d') der Uplink-Signalleitungen (a' - e') vom Remote-Uplink-Combiner (31) zugeordnet ist,
- wobei der zweite Uplink-Frequenzmischer (49') in der Uplink-Richtung (UL) einer zweiten Uplink-Signalleitung (e') der Uplink-Signalleitungen (a' - e') vom Remote-Uplink-Combiner (31) zugeordnet ist,
- wobei der erste Uplink-Frequenzmischer (50') und der zweite Uplink-Frequenzmischer (49') ausgebildet sind, in ursprünglichen Frequenzbändern überlagerte MIMO-Übertragungssignale in Zwischenfrequenzbänder umzusetzen,
- wobei der erste Downlink-Frequenzmischer (50) und der zweite Downlink-Frequenzmischer (49) ausgebildet sind, Signale von Zwischenfrequenzbändern in ursprüngliche Frequenzbänder von MIMO-Übertragungssignalen umzusetzen und wobei die Signale der übrigen Signalleitungen ohne Konvertierung durchgeführt sind,
- wobei die Zwischenfrequenzbänder freie Frequenzbänder sind, die zwischen Frequenzbändern von Standards zur Übertragung drahtloser Information zur Vermeidung von Überlappeffekten vorgesehen sind.

8. Remote-Einheit (3, 3') nach Anspruch 7,
wobei das erste Downlink-Remotemodem (38), das zweite Downlink-Remotemodem (38'), das erste Uplink-Remotemodem (39) und das zweite Uplink-Remotemodem (39') zu einer QAM- oder FSK-Modulation/Demodulation ausgebildet sind.

9. Remote-Einheit (3, 3') nach Anspruch 7 oder 8,
wobei der erste Downlink-Frequenzmischer (50), der erste Uplink-Frequenzmischer (50'), der zweite Downlink-Frequenzmischer (49) und der zweite Uplink-Frequenzmischer (49') eingerichtet sind, in Uplink-Richtung (UL) eine Anzahl n-1 von n sich überlagernder Frequenzbänder der MIMO-Übertragungssignale in Zwischenfrequenzbänder umzusetzen, und wobei eines dieser sich überlagernder Frequenzbänder auf seiner Frequenz durchgeführt ist.

10. Remote-Einheit (3, 3') nach einem der Ansprüche 7 bis 9,
wobei das erste Downlink-Remotemodem (38), das zweite Downlink-Remotemodem (38'), das erste Uplink-Remotemodem (39) und das zweite Uplink-Remotemodem (39') zur Übertragung digitaler Basisbanddaten auf der gemeinsamen Downlink-Signalleitung (34) und der gemeinsamen Uplink-Signalleitung (34') ausgebildet sind.

11. Remote-Einheit (3, 3') nach einem der Ansprüche 7 bis 10,
wobei diese eine Anzahl von einstellbaren Verzögerungsgliedern zur Verzögerung der Übertragungssignale umfasst.

12. Multiband-Übertragungssystem (1)
zur Verteilung und Zusammenführung von Signalen mindestens eines drahtlosen Kommunikationsnetzes und mindestens eines digitalen Netzwerks, umfassend mindestens eine Master-Einheit (2,2') nach Anspruch 1 und mindestens eine Remote-Einheit (3, 3') nach Anspruch 7,
wobei die Remote-Uplink-Schnittstelle (32) und die Remote-Downlink-Schnittstelle (33) der mindestens einen Remote-Einheit (3, 3') mit der Master-Downlink-Schnittstelle (9) und der Master-Uplink-Schnittstelle (8) der mindestens einen Master-Einheit (2, 2') über mindestens eine zentrale Signal-Leitung (27) verbunden sind.

13. Multiband-Übertragungssystem (1) nach Anspruch 12,
wobei die zentrale Signal-Leitung (27) ein Lichtwellenleiter ist, welchem in der Remote-Einheit (3, 3') und in der Master-Einheit (2, 2') jeweils eine optoelektrische Wandlereinheit zur jeweiligen Umwandlung der Übertragungssignale zugeordnet ist.

## Claims

1. Master unit (2, 2') for distributing and combining signals of at least one wireless communication network and at least one digital network,
comprising a first downlink master modem (5), a first uplink master modem (5'), a second downlink master modem (6), a second uplink master modem (6'), a master uplink interface (8), a master downlink interface (9), a master downlink combiner (10), a master uplink splitter (7), a reference frequency generator (12), a first downlink frequency generator (15), a second downlink frequency generator (16), a first uplink frequency generator (15'), a second uplink frequency generator (16'), a first downlink frequency mixer (17), a second downlink frequency mixer (18), a first uplink frequency mixer (17'), a second uplink frequency mixer (18') and a master transmission unit (25)
- wherein the first downlink master modem (5), the first uplink master modem (5'), the second downlink master modem (6) and the second uplink master modem (6') are configured to communicate with the at least one digital network and are connected to the reference frequency generator (12),
- wherein the master downlink interface (9) and the master uplink interface (8) are configured for communication with a base station (BTS) of the at least one wireless communication network,
- wherein the master downlink combiner (10) and the master uplink splitter (7) are designed for connection to at least one remote unit (3, 3'),
- wherein, in the downlink direction (DL), downlink signal lines (a - e) are combined in the master downlink combiner (10) to form a common downlink signal line (23), to which the reference frequency signal of the reference frequency generator (12) and a data signal of the master modem (5, 6) are connected, and the common downlink signal line (23) is guided into the master transmission unit (25),
- wherein uplink signal lines (a' - e') are split in the uplink direction (UL) from a common uplink signal line (23') in the master uplink splitter (7) and a data signal of the at least one digital network is uncoupled and supplied to the first uplink master modem (5') and the second uplink master modem (6'),
- wherein the reference frequency signal of the reference frequency generator (12) is used for clocking the first downlink master modem (5), the first uplink master modem (5'), the second downlink master modem (6) and the second uplink master modem (6'),
- wherein the reference frequency signal is used at the same time for clocking the first downlink frequency generator (15), the second downlink frequency generator (16), the first uplink frequency generator (15') and the second uplink frequency generator (16'),
- wherein the first downlink frequency generator (15) is designed for frequency conversion in the downlink direction (DL), the second downlink frequency generator (16) is designed for frequency conversion in the downlink direction (DL), the first uplink frequency generator (15') is designed for frequency conversion in the uplink direction (UL), the second uplink frequency generator (16') is designed for frequency conversion in the uplink direction (UL),
- wherein the first uplink frequency mixer (17') is assigned to a first uplink signal line (d') of the uplink signal lines (a' - e') from the master uplink splitter (7),
- wherein the second uplink frequency mixer (18') is assigned to a second uplink signal line (e') of the uplink signal lines (a' - e') from the master uplink splitter (7),
- wherein the first downlink frequency mixer (17), in the downlink direction (DL), is assigned to a first downlink signal line (d) of the downlink signal lines (a - e) from the master downlink combiner (10),
- wherein the second downlink frequency mixer (18), in the downlink direction (DL), is assigned to a second downlink signal line (e) of the downlink signal lines (a - e) from the master downlink combiner (10),
- wherein the first downlink frequency mixer (17) and the second downlink frequency mixer (18) are designed to convert MIMO transmission signals superimposed in original frequency bands into intermediate frequency bands,
- wherein the first uplink frequency mixer (17') and the second uplink frequency mixer (18') are designed to convert signals of intermediate frequency bands into original frequency bands of MIMO transmission signals, and wherein the signals of the remaining signal lines are carried out without conversion,
- wherein the intermediate frequency bands are free frequency bands provided between frequency bands of standards for transmission of wireless information for avoiding overlapping effects.

2. Master unit (2, 2') according to claim 1,
wherein a spread sequence generator is connected downstream of the reference frequency generator (12) and is used to spread the data signal of the master modem (5, 5' or 6, 6').

3. Master unit (2, 2') according to claim 2,
wherein the spread sequence generator is used for spreading the reference frequency signal.

4. Master unit (2,2') according to any of the preceding claims,
wherein the first downlink master modem (5), the first uplink master modem (5'), the second downlink master modem (6) and/or the second uplink master modem (6') is, respectively are designed for QAM or FSK modulation/demodulation.

5. Master unit (2,2') according to any of claims 1 to 4,
wherein the first downlink frequency mixer (17), the first uplink frequency mixer (17'), the second downlink frequency mixer (18) and the second uplink frequency mixer (18') are configured to convert in the downlink direction (DL) a number n-1 of n of the overlapping frequency bands of the overlapping MIMO transmission signals into intermediate frequency bands, and
wherein one of the overlapping frequency bands is carried out at its frequency.

6. Master unit (2,2') according to any of the preceding claims,
wherein the first downlink master modem (5), the first uplink master modem (5'), the second downlink master modem (6) and/or the second uplink master modem (6') are designed to transmit digital baseband data on the common downlink signal line (23) and the common uplink signal line (23').

7. Remote unit (3, 3')
for distributing and combining signals of at least one wireless communication network and at least one digital network, comprising at least a first downlink remote modem (38), a second downlink remote modem (38'), a first uplink remote modem (39), a second uplink remote modem (39'), a remote uplink interface (32), a remote downlink interface (33), a remote uplink combiner (31), a remote downlink splitter (30), a reference frequency receiver (40), a first downlink frequency generator (47), a first uplink frequency generator (47'), a second downlink frequency generator (48) a second uplink frequency generator (48'), a first downlink frequency mixer (50), a first uplink frequency mixer (50'), a second downlink frequency mixer (49), a second uplink frequency mixer (49'), and a remote transmission unit (36),
- wherein the first downlink remote modem (38), the second downlink remote modem (38'), the first uplink remote modem (39) and the second uplink remote modem (39'), are configured for communication with at least a user terminal and are connected to the reference frequency receiver (40),
- wherein the remote downlink interface (33) and the remote uplink interface (32) are configured for communication with a network terminal of the at least one wireless communication network,
- wherein the remote downlink splitter (30) and the remote uplink combiner (31) are configured for connection to a master unit (2,2'),
- wherein, in the downlink direction (DL), a common downlink signal line (34) is guided from the remote transmission unit (36) into the remote downlink splitter (30),
- wherein a reference frequency signal and a data signal of the at least one digital network are uncoupled and supplied to the reference signal receiver (40), respectively to the first downlink remote modem (38) or the second downlink remote modem (38'), and the common downlink signal line (34) in the remote downlink splitter (30) is divided into a plurality of signal lines (a - e), which are connected to the remote downlink interface (33),
- wherein a number of uplink signal lines (a'- e') is combined in the uplink direction (UL) in the remote uplink combiner (31) to form a common uplink signal line (34'), to which the data signal of the first uplink remote modem (38') or of the second uplink remote modem (39') is connected, and this uplink signal line (34'), which is common in the uplink direction, is connected to the remote transmission unit (36),
- wherein the reference frequency signal is used for clocking the first downlink remote modem (38), the second downlink remote modem (38'), the first uplink remote modem (39) and the second uplink remote modem (39'),
- wherein the reference frequency signal is simultaneously used for clocking the first downlink frequency generator (47), the first uplink frequency generator (47'), the second downlink frequency generator (48) and the second uplink frequency generator (48'),
- wherein the first downlink frequency generator (47) is designed for frequency conversion in the downlink direction (DL), wherein the second downlink frequency generator (48) is designed for frequency conversion in the downlink direction (DL), wherein the first uplink frequency generator (47') is designed for frequency conversion in the uplink direction (UL), wherein the second uplink frequency generator (48') is designed for frequency conversion in the uplink direction (UL),
- wherein the first downlink frequency mixer (50) is assigned to a first downlink signal line (d) of the downlink signal lines (a - e) from the remote downlink splitter (30),
- wherein the second downlink frequency mixer (49) is assigned to a second downlink signal line (e) of the downlink signal lines (a - e) from the remote downlink splitter (30),
- wherein the first uplink frequency mixer (50') is assigned in the uplink direction (UL) to a first uplink signal line (d') of the uplink signal lines (a' - e') from the remote uplink combiner (31),
- wherein the second uplink frequency mixer (49') is assigned in the uplink direction (UL) to a second uplink signal line (e') of the uplink signal lines (a' - e') from the remote uplink combiner (31),
- wherein the first uplink frequency mixer (50') and the second uplink frequency mixer (49') are adapted to convert MIMO transmission signals superimposed in original frequency bands into intermediate frequency bands,
- wherein the first downlink frequency mixer (50) and the second downlink frequency mixer (49) are designed to convert signals of intermediate frequency bands into original frequency bands of MIMO transmission signals, and wherein the signals of the remaining signal lines are carried out without conversion,
- wherein the intermediate frequency bands are free frequency bands provided between frequency bands of standards for transmission of wireless information for avoiding overlapping effects.

8. Remote unit (3, 3') according to claim 7,
wherein the first downlink remote modem (38), the second downlink remote modem (38'), the first uplink remote modem (39) and the second uplink remote modem (39') are formed to QAM or FSK modulation/demodulation.

9. Remote unit (3, 3') according to claim 7 or 8,
wherein the first downlink frequency mixer (50), the first uplink frequency mixer (50'), the second downlink frequency mixer (49) and the second uplink frequency mixer (49') are configured to convert in the uplink direction (UL) a number n-1 of n overlapping frequency bands of the MIMO transmission signals into intermediate frequency bands, and
wherein one of these overlapping frequency bands is carried out on its frequency.

10. Remote unit (3, 3') according to any of claims 7 to 9,
wherein the first downlink remote modem (38), the second downlink remote modem (38'), the first uplink remote modem (39) and the second uplink remote modem (39') are configured to transmit digital baseband data on the common downlink signal line (34) and the common uplink signal line (34').

11. Remote unit (3, 3') according to any of claims 7 to 10,
wherein said remote unit (3, 3') comprises a plurality of adjustable delay elements for delaying the transmission signals.

12. Multiband transmission system (1)
for distributing and combining signals of at least one wireless communication network and at least one digital network, comprising at least one master unit (2, 2') according to claim 1 and at least one remote unit (3, 3') according to claim 7, wherein the remote uplink interface (32) and the remote downlink interface (33) of the at least one remote unit (3, 3') are connected to the master downlink interface (9) and the master uplink interface (8) of the at least one master unit (2, 2') via at least one central signal line (27).

13. Multiband transmission system (1) according to claim 12,
wherein the central signal line (27) is an optical waveguide, to which in the remote unit (3, 3') and in the master unit (2, 2') respectively an opto-electrical converter unit is assigned for the respective conversion of the transmission signals.

## Revendications

1. Unité maître (2, 2') pour la distribution et la combinaison des signaux d'au moins un réseau de communication sans fil et au moins un réseau numérique, l'unité maître (2, 2') comprenant un premier modem maître de liaison descendante (5), un premier modem maître de liaison montante (5'), un deuxième modem maître de liaison descendante (6), un deuxième modem maître de liaison montante (6'), une interface maître de liaison montante (8), une interface maître de liaison descendante (9), un combineur maître de liaison descendante (10), un diviseur maître de liaison montante (7), un générateur de fréquence de référence (12), un premier générateur de fréquence de liaison descendante (15) un deuxième générateur de fréquence de liaison descendante (16), un premier générateur de fréquence de liaison montante (15'), un deuxième générateur de fréquence de liaison montante (16'), un premier mélangeur de fréquence de liaison descendante (17), un deuxième mélangeur de fréquence de liaison descendante (18), un premier mélangeur de fréquence de liaison montante (17'), un deuxième mélangeur de fréquence de liaison montante (18') et une unité de transmission principale (25)
- dans laquelle le premier modem maître de liaison descendante (5), le premier modem maître de liaison montante (5'), le deuxième modem maître de liaison descendante (6) et le deuxième modem maître de liaison montante (6') sont configurés pour communiquer avec le au moins un réseau numérique et sont connectés au générateur de fréquence de référence (12),
- dans laquelle l'interface maître de liaison descendante (9) et l'interface maître de liaison montante (8) sont configurées pour communiquer avec une station de base (BTS) du au moins un réseau de communication sans fil,
- dans laquelle le combinateur maître de liaison descendante (10) et le diviseur maître de liaison montante (7) sont configurés pour être connectés à au moins une unité distante (3, 3')
- dans laquelle, dans la direction de la liaison descendante (DL), les lignes de signaux de liaison descendante (a - e) sont combinées dans le combinateur maître de liaison descendante (10) pour former une ligne de signaux de liaison descendante commune (23), à laquelle le signal de fréquence de référence de l'générateur de fréquence de référence (12) et un signal de données du modem maître (5, 6) sont connectés, et la ligne de signaux de liaison descendante commune (23) est acheminée dans l'unité de transmission maître (25),
- dans laquelle les lignes de signaux de liaison montante (a' - e') sont séparées dans la direction de la liaison montante (UL) à partir d'une ligne de signaux de liaison montante commune (23') dans le diviseur maître de liaison montante (7) et un signal de données du au moins un réseau numérique est découplé et fourni au premier modem maître de liaison montante (5') et au deuxième modem maître de liaison montante (6'),
- dans laquelle le signal de fréquence de référence de l'générateur de fréquence de référence (12) est utilisé pour synchroniser le premier modem maître de liaison descendante (5), le premier modem maître de liaison montante (5'), le deuxième modem maître de liaison descendante (6) et le deuxième modem maître de liaison montante (6'),
- dans laquelle le signal de fréquence de référence est utilisé en même temps pour cadencer le premier générateur de fréquence de liaison descendante (15), le deuxième générateur de fréquence de liaison descendante (16), le premier générateur de fréquence de liaison montante (15') et le deuxième générateur de fréquence de liaison montante (16'),
- dans laquelle le premier générateur de fréquence de liaison descendante (15) est conçu pour la conversion de fréquence dans la direction de liaison descendante (DL), le deuxième générateur de fréquence de liaison descendante (16) est conçu pour la conversion de fréquence dans la direction de liaison descendante (DL), le premier générateur de fréquence de liaison montante (15') est conçu pour la conversion de fréquence dans la direction de liaison montante (UL), le deuxième générateur de fréquence de liaison montante (16') est conçu pour la conversion de fréquence dans la direction de liaison montante (UL),
- dans laquelle le premier mélangeur de fréquence de liaison montante (17') est associé à une première ligne de signal de liaison montante (d') des lignes de signal de liaison montante (a' - e') provenant du diviseur maître de liaison montante (7),
- dans laquelle le deuxième mélangeur de fréquence de liaison montante (18') est associé à une deuxième ligne de signal de liaison montante (e') des lignes de signal de liaison montante (a' - e') provenant du diviseur maître de liaison montante (7),
- dans laquelle le premier mélangeur de fréquence de liaison descendante (17) est associé dans la direction de liaison descendante (DL) à une première ligne de signal de liaison descendante (d) des lignes de signal de liaison descendante (a - e) provenant du combineur de liaison descendante maître (10),
- dans laquelle le deuxième mélangeur de fréquence de liaison descendante (18) est associé dans la direction de liaison descendante (DL) à une deuxième ligne de signal de liaison descendante (e) des lignes de signal de liaison descendante (a - e) provenant du combineur de liaison descendante maître (10),
- dans laquelle le premier mélangeur de fréquence de liaison descendante (17) et le deuxième mélangeur de fréquence de liaison descendante (18) sont conçus pour convertir les signaux de transmission MIMO superposés dans les bandes de fréquence d'origine en bandes de fréquence intermédiaires.
- dans laquelle le premier mélangeur de fréquence de liaison montante (17') et le deuxième mélangeur de fréquence de liaison montante (18') sont conçus pour convertir des signaux de bandes de fréquences intermédiaires en bandes de fréquences originales de signaux de transmission MIMO, et dans laquelle les signaux des lignes de signaux restantes sont exécutés sans conversion,
- dans laquelle les bandes de fréquences intermédiaires sont des bandes de fréquences libres prévues entre des bandes de fréquences de normes de transmission d'informations sans fil pour éviter les effets de chevauchement.

2. Unité maître (2, 2') selon la revendication 1,
dans laquelle un générateur de séquence d'étalement est connecté en aval du générateur de fréquence de référence (12) et est utilisé pour étaler le signal de données du modem maître (5, 5' ou 6, 6').

3. Unité maître (2, 2') selon la revendication 2,
dans laquelle le générateur de séquence d'étalement est utilisé pour étaler le signal de fréquence de référence.

4. Unité maître (2,2') selon l'une des revendications précédentes,
dans laquelle le premier modem maître de liaison descendante (5), le premier modem maître de liaison montante (5'), le deuxième modem maître de liaison descendante (6) et/ou le deuxième modem maître de liaison montante (6') est, respectivement sont conçus à une modulation/démodulation QAM ou FSK.

5. Unité maître (2,2') selon l'une quelconque des revendications 1 à 4,
dans laquelle le premier mélangeur de fréquence de liaison descendante (17), le premier mélangeur de fréquence de liaison montante (17'), le deuxième mélangeur de fréquence de liaison descendante (18) et le deuxième mélangeur de fréquence de liaison montante (18') sont configurés pour convertir, dans la direction de liaison descendante (DL), un nombre n-1 de n des bandes de fréquences se chevauchant des signaux de transmission MIMO superposés en bandes de fréquences intermédiaires, et
dans laquelle l'une desdites bandes de fréquences, qui se chevauchent, est exécutée à sa fréquence.

6. Unité maître (2,2') selon l'une des revendications précédentes,
dans laquelle le premier modem maître de liaison descendante (5), le premier modem maître de liaison montante (5'), le deuxième modem maître de liaison descendante (6) et/ou le deuxième modem maître de liaison montante (6') sont conçus pour transmettre des données numériques en bande de base sur la ligne de signal de liaison descendante commune (23) et la ligne de signal de liaison montante commune (23').

7. Unité distante (3, 3')
pour la distribution et la combinaison des signaux d'au moins un réseau de communication sans fil et d'au moins un réseau numérique, l'unité à distance (3, 3') comprenant au moins un premier modem distant de liaison descendante (38), un deuxième modem distant de liaison descendante (38') un premier modem distant de liaison montante (39), un deuxième modem distant de liaison montante (39'), une interface de liaison montante distante (32), une interface de liaison descendante distante (33), un combinateur de liaison montante distante (31), un séparateur de liaison descendante distante (30) un récepteur de fréquence de référence (40), un premier générateur de fréquence de liaison descendante (47), un premier générateur de fréquence de liaison montante (47'), un deuxième générateur de fréquence de liaison descendante (48), un deuxième générateur de fréquence de liaison montante (48') un premier mélangeur de fréquence de liaison descendante (50), un premier mélangeur de fréquence de liaison montante (50'), un deuxième mélangeur de fréquence de liaison descendante (49), un deuxième mélangeur de fréquence de liaison montante (49'), et une unité de transmission à distance (36),
- dans laquelle le premier modem distant de liaison descendante (38), le deuxième modem distant de liaison descendante (38'), le premier modem distant de liaison montante (39) et le deuxième modem distant de liaison montante (39'), sont configurés pour communiquer avec au moins un terminal utilisateur et sont connectés au récepteur de fréquence de référence (40),
- dans laquelle l'interface de liaison descendante distante (33) et l'interface de liaison montante distante (32) sont configurées pour communiquer avec un terminal de réseau du au moins un réseau de communication sans fil,
- dans laquelle le séparateur de liaison descendante distant (30) et le combinateur de liaison montante à distance (31) sont configurés pour être connectés à une unité maître (2, 2'),
- dans laquelle, dans la direction de la liaison descendante (DL), une ligne de signal de liaison descendante commune (34) est acheminée depuis l'unité de transmission distante (36) dans le séparateur de liaison descendante distant (30),
- dans laquelle un signal de fréquence de référence et un signal de données du au moins un réseau numérique sont découplés et fournis au récepteur de signal de référence (40) ou au premier modem distant de liaison descendante (38) ou au deuxième modem distant de liaison descendante (38'), respectivement, et la ligne de signal de liaison descendante commune (34) dans le séparateur de liaison descendante distante (30) est divisée en une pluralité de lignes de signal (a - e), qui sont connectées à l'interface de liaison descendante distante (33),
- dans laquelle une pluralité de lignes de signaux de liaison montante (a' - e') sont combinées dans la direction de la liaison montante (UL) dans le combinateur de liaison montante à distance (31) pour former une ligne de signaux de liaison montante commune (34'), à laquelle le signal de données du premier modem distant de liaison montante (38') ou du deuxième modem à distance de liaison montante (39') est connecté, et cette ligne de signaux de liaison montante (34') commune dans la direction de la liaison montante est connectée à l'unité de transmission à distance (36),
- dans laquelle le signal de fréquence de référence est utilisé pour cadencer le premier modem distant de liaison descendante (38), le deuxième modem distant de liaison descendante (38'), le premier modem distant de liaison montante (39) et le deuxième modem distant de liaison montante (39'),
- dans laquelle le signal de fréquence de référence est utilisé simultanément pour cadencer le premier générateur de fréquence de liaison descendante (47), le premier générateur de fréquence de liaison montante (47'), le deuxième générateur de fréquence de liaison descendante (48) et le deuxième générateur de fréquence de liaison montante (48'),
- dans laquelle le premier générateur de fréquence de liaison descendante (47) est conçu pour la conversion de fréquence dans la direction de la liaison descendante (DL), dans laquelle le deuxième générateur de fréquence de liaison descendante (48) est conçu pour la conversion de fréquence dans la direction de la liaison descendante (DL), le premier générateur de fréquence de liaison montante (47') étant conçu pour la conversion de fréquence dans la direction de la liaison montante (UL), dans laquelle le deuxième générateur de fréquence de liaison montante (48') est conçu pour la conversion de fréquence dans la direction de la liaison montante (UL),
- dans laquelle le premier mélangeur de fréquence de liaison descendante (50) est associé à une première ligne de signal de liaison descendante (d) des lignes de signal de liaison descendante (a - e) provenant du séparateur de liaison descendante distant (30),
- dans laquelle le deuxième mélangeur de fréquence de liaison descendante (49) est associé à une deuxième ligne de signal de liaison descendante (e) des lignes de signal de liaison descendante (a - e) provenant du séparateur de liaison descendante distant (30),
- dans laquelle le premier mélangeur de fréquence de liaison montante (50') est associé dans la direction de liaison montante (UL) à une première ligne de signal de liaison montante (d') des lignes de signal de liaison montante (a' - e') provenant du combineur de liaison montante distant (31),
- dans laquelle le deuxième mélangeur de fréquence de liaison montante (49') est associé dans la direction de liaison montante (UL) à une deuxième ligne de signal de liaison montante (e') des lignes de signal de liaison montante (a' - e') provenant du combineur de liaison montante distant (31),
- dans laquelle le premier mélangeur de fréquence de liaison montante (50') et le deuxième mélangeur de fréquence de liaison montante (49') sont conçus pour convertir les signaux de transmission MIMO superposés dans les bandes de fréquence d'origine en bandes de fréquence intermédiaires.
- dans laquelle le premier mélangeur de fréquence de liaison descendante (50) et le deuxième mélangeur de fréquence de liaison descendante (49) sont conçus pour convertir des signaux de bandes de fréquences intermédiaires en bandes de fréquences originales de signaux de transmission MIMO, et dans laquelle les signaux des lignes de signaux restantes sont exécutés sans conversion,
- dans laquelle les bandes de fréquences intermédiaires sont des bandes de fréquences libres prévues entre des bandes de fréquences de normes de transmission d'informations sans fil pour éviter les effets de chevauchement.

8. Unité distante (3, 3') selon la revendication 7,
dans laquelle le premier modem distant de liaison descendante (38), le deuxième modem distant de liaison descendante (38'), le premier modem distant de liaison montante (39) et le deuxième modem distant de liaison montante (39') sont formés à une modulation/démodulation QAM ou FSK.

9. Unité distante (3, 3') selon la revendication 7 ou 8,
dans laquelle le premier mélangeur de fréquence de liaison descendante (50), le premier mélangeur de fréquence de liaison montante (50'), le deuxième mélangeur de fréquence de liaison descendante (49) et le deuxième mélangeur de fréquence de liaison montante (49') sont configurés pour convertir dans la direction de liaison montante (UL) un nombre n-1 de n bandes de fréquences se chevauchant desdits signaux de transmission MIMO en bandes de fréquences intermédiaires, et
dans laquelle l'une desdites bandes de fréquences, qui se chevauchent, est exécutée à sa fréquence.

10. Unité distante (3, 3') selon l'une des revendications 7 à 9,
dans laquelle le premier modem distant de liaison descendante (38), le deuxième modem distant de liaison descendante (38'), le premier modem distant de liaison montante (39) et le deuxième modem distant de liaison montante (39') sont conçus pour transmettre des données numériques en bande de base sur la ligne de signal de liaison descendante commune (34) et la ligne de signal de liaison montante commune (34').

11. Unité distante (3, 3') selon l'une des revendications 7 à 10,
dans laquelle ladite unité distante (3, 3') comprend une pluralité d'éléments de retard réglables pour retarder les signaux de transmission.

12. Système de transmission multibande (1)
pour la distribution et la combinaison des signaux d'au moins un réseau de communication sans fil et d'au moins un réseau numérique, comprenant au moins une unité maître (2, 2') selon la revendication 1 et au moins une unité distante (3, 3') selon la revendication 7,
dans laquelle l'interface de liaison montante distante (32) et l'interface de liaison descendante distante (33) de la au moins une unité distante (3, 3') sont connectées à l'interface de liaison descendante maître (9) et à l'interface de liaison montante maître (8) de la au moins une unité maître (2, 2') par l'intermédiaire d'au moins une ligne de signal centrale (27).

13. Système de transmission multibande (1) selon la revendication 12,
dans laquelle la ligne centrale de signaux (27) est un guide d'ondes optiques, auquel est associée, dans l'unité distante (3, 3') et dans l'unité maître (2, 2'), respectivement une unité de conversion opto-électrique pour la conversion respective des signaux de transmission.
